Europäisches Patentamt

European Patent Office

Office européen des brevets

(19)

(11) **EP 0 657 053 B1**

(12) **EUROPÄISCHE PATENTSCHRIFT**

(45) Veröffentlichungstag und Bekanntmachung des Hinweises auf die Patenterteilung:
**19.06.1996 Patentblatt 1996/25**

(21) Anmeldenummer: **93918924.7**

(22) Anmeldetag: **27.08.1993**

(51) Int Cl.⁶: **G06F 15/80**

(86) Internationale Anmeldenummer:
**PCT/DE93/00784**

(87) Internationale Veröffentlichungsnummer:
**WO 94/06095 (17.03.1994 Gazette 1994/07)**

(54) **VERFAHREN ZUM ENTWURF EINES NEURONALEN NETZES UND DANACH ERHALTENES NEURONALES NETZ**

METHOD OF DESIGNING A NEURAL NETWORK AND NEURAL NETWORK THEREBY ACHIEVED

PROCEDE POUR CONCEVOIR UN RESEAU NEURONAL ET RESEAU NEURONAL OBTENUE DANS CETTE MANIERE

(84) Benannte Vertragsstaaten:
**AT BE CH DE ES FR GB IT LI NL SE**

(30) Priorität: **28.08.1992 DE 4228703**

(43) Veröffentlichungstag der Anmeldung:
**14.06.1995 Patentblatt 1995/24**

(73) Patentinhaber: **SIEMENS AKTIENGESELLSCHAFT D-80333 München (DE)**

(72) Erfinder: **KIRCHBERG, Karl-Heinz D-76187 Karlsruhe (DE)**

(56) Entgegenhaltungen:
- **IEEE TRANSACTIONS ON NEURAL NETWORKS Bd. 2, Nr. 4, Juli 1991, NEW YORK US Seiten 467 - 471 SARTORI 'A simple method to derive bounds on the size and to train multilayer neural networks'**
- **IEEE INTERNATIONAL CONFERENCE ON SYSTEMS ENGINEERING 9. August 1990, PITTSBURGH, USA Seiten 613 - 616 WANG 'On the design principles of the functional link nets'**
- **IEEE TRANSACTIONS ON SIGNAL PROCESSING Bd. 40, Nr. 1, Januar 1992, NEW YORK US Seiten 202 - 210 SCALERO 'A fast new algorithm for training feedforward neural networks'**
- **IJCNN INTERNATIONAL JOINT CONFERENCE ON NEURAL NETWORKS Bd. 2, 19. Juni 1989, WASHINGTON, USA Seiten 557 - 560 PORADA 'Interactional parallel processing in neural nets'**
- **SECOND INTERNATIONAL CONFERENCE ON ARTIFICIAL NEURAL NETWORKS 18. November 1991, BOURNEMOUTH, UK Seiten 185 - 189 LUCAS 'Algebraic learning in syntactic neural networks'**

**Beschreibung**

Die Erfindung bezieht sich auf ein Verfahren zum Entwurf eines neuronalen Netzes nach dem Oberbegriff des Anspruchs 1 und auf ein neuronales Netz, welches mit dem Verfahren erhältlich ist.

Neuronale Netze, wie sie z. B. aus dem Buch "Neuronale Netzwerke" von Eberhard Schöneburg, Nikolaus Hansen und Andreas Gawelczyk, erschienen 1990 im Markt & Technik Verlag, bekannt sind, können aufgrund ihrer Netzwerkstruktur anhand von vorgegebenen Ein-/Ausgangswerten eine nichtlineare Abbildungsvorschrift lernen. Ein häufig verwendetes Lernverfahren ist das auf den Seiten 90 bis 98 des oben angegebenen Buches beschriebene Backpropagation-Verfahren. Die Gewichte (Parameter) des neuronalen Netzes werden zu Beginn mit Zufallswerten initialisiert. Es wird dann das erste Eingangsmuster an das Netz angelegt. Mit diesen Werten wird das Netz komplett durchgerechnet. Der berechnete Ausgangswert des neuronalen Netzes wird nun mit dem geforderten Ausgangswert verglichen. Die Abweichung ergibt einen Fehlerwert. Die Gewichte des neuronalen Netzes werden nun so korrigiert, daß zu einem Eingangswert der korrekte Ausgangswert angenähert wird. Dies wird erreicht, indem man den ermittelten Fehler anteilmäßig auf die Gewichte der vorhergehenden Neuronen aufteilt und die Gewichte entsprechend ändert, so daß der Fehler minimal wird. Der Fehler wird also vom Ausgang auf den Eingang des neuronalen Netzes zurückgerechnet. Das Aufteilen des Fehlers erfolgt anhand der Größe der Gewichte. Je größer der Wert eines Gewichts ist, desto stärker ist auch dessen Beitrag zum Fehler und entsprechend stark wird dieses Gewicht dann geändert. Dieses Verfahren wird nun für sehr viele Ein-/Ausgangswerte durchgeführt, d. h., es wird ein Ausgangsmuster angelegt, durchgerechnet und der Fehler auf die Gewichte zurückgerechnet. Zu Beginn sind die Abweichungen noch sehr groß, und es ergeben sich entsprechend große Änderungen für die Gewichte. Wenn sich aber die Werte stabilisieren, hat das neuronale Netz die geforderte Abbildungsvorschrift gelernt. Das Trainieren des Netzes anhand von Stützwerten mit dem Backpropagation-Verfahren stellt daher ein iteratives Verfahren dar. Nachteilig dabei ist, daß es nur langsam konvergiert und das iterative Ermitteln der Parameter sehr große Rechenzeiten erfordert. Zudem ist das anteilige Aufteilen des Fehlers nur möglich, wenn die nichtlineare Funktion der Neuronen stetig differenzierbar ist und wenn sich die Eingangssignale in den Neuronen linear überlagern. Das Backpropagation-Verfahren funktioniert daher nur für spezielle Neuronentypen. Nachteilig ist auch, daß die sich nach dem Backpropagation-Verfahren ergebenden Lösungen in der Regel nicht reproduzierbar sind. Aufgrund der Anfangsinitialisierung mit Zufallszahlen und den nichtlinearen Eigenschaften der neuronalen Netze erhält man in verschiedenen Simulationsläufen für gleiche Lerndaten unterschiedliche Lösungen.

Ein Verfahren zum Entwurf eines neuronalen Netzes nach dem Oberbegriff des Anspruchs 1 ist aus der Druckschrift IEEE TRANSACTIONS ON NEURAL NETWORKS , Bd. 2, Nr.4, Juli 1991; New York US, Seiten 467 - 471 bekannt.

Das bekannte Verfahren weist mindestens einen Eingang und mindestens einen Ausgang sowie Neuronen in mehreren hintereinander angeordneten Schichten auf, wobei in den Neuronen einer Zwischenschicht Eingangssignale zunächst gewichtet, dann miteineander verknüpft und mit einem nichtlinearen Element ein Ausgangsignal gebildet wird und jedem Ausgang der Ausgangsschicht des neuronalen Netzes ein Ausgangsneuron zugeordnet ist, auf welches die Ausgangssignale der Neuronen der vorhergehenden Schicht geführt sind und in denen durch eine Gewichtung und Verknüpfung dieser Signale jeweils ein Ausgangssignal erzeugt wird, bei welchem für jedes Ausgangsneutron Stützwerte für Eingangs- und Ausgangssignale vorgegeben werden.

Die Gewichte der Neuronen der Zwischenschicht werden weitgehend zufällig gewählt, so daß auch dort die Ergebnisse des Entwurfsverfahrens nicht eindeutig reproduzierbar sind. Für verschiedene Gewichte der Neuronen der Zwischenschicht liefert das bekannte Entwurfsverfahren unterschiedliche Lösungen für gleiche Trainingsdaten.

Der Erfindung liegt die Aufgabe zugrunde, ein Verfahren zum Entwurf neuronaler Netze zu finden, das es erlaubt, neuronale Netze mit allgemeineren Neuronentypen direkt anhand von Stützwerten zu bestimmen.

Zur Lösung dieser Aufgabe weist das neue Verfahren der eingangs genannten Art die im kennzeichnenden Teil des Anspruchs 1 genannten Merkmale auf. In den Ansprüchen 2 bis 9 sind vorteilhafte Weiterbildungen des Verfahrens angegeben. Mit dem neuen Verfahren können nach Anspruch 10 neuartige neuronale Netze erhalten werden, deren Neuronen eine weitgehend beliebige nichtlineare Funktion aufweisen. Dabei kann es sich um dreilagige Netzwerke handeln, d. h. um neuronale Netze mit einer Eingangsschicht, einer Zwischenschicht und einer Ausgangsschicht. Das Entwurfsverfahren ist bei einer beliebigen Anzahl von Eingangs- und Ausgangsneuronen anwendbar. Der Entwurf des neuronalen Netzes erfolgt durch Aufstellen und Lösen eines linearen Gleichungssystems. Um eine lineare Gleichung mit n unbekannten Parametern zu lösen, benötigt man mindestens n linear unabhängige Wertepaare für die Eingangs- und Ausgangssignale des neuronalen Netzes. Mit diesen Wertepaaren wird ein Gleichungssystem zur Ermittlung der unbekannten Parameter des neuronalen Netzes aufgestellt. Gibt es genausoviele Wertepaare wie Parameter, dann ist eine eindeutige Lösung des Gleichungssystems möglich. Sind mehr Wertepaare vorhanden als Parameter, dann erhält man ein überbestimmtes Gleichungssystem, bei dem die Parameter über eine lineare Regression ermittelt werden können. Die Gleichungen des linearen Gleichungssystems werden mit den Verbindungen zwischen den Neuronen der Zwischenschicht und dem Ausgangsneuron realisiert. Die Gewichte und die Offsets in den Neuronen der Zwischenschicht werden so voreingestellt, daß man aus den n Wertepaaren n linear unabhängige Gleichungen aufstellen kann und das Gleichungssystem lösbar ist. Die Gewichte in den Ausgangsneuronen entsprechen dann der Lösung dieses Gleichungssystems.

Das neue Verfahren hat den Vorteil, daß es ermöglicht, neuronale Netze mit wesentlich allgemeineren Neuronentypen aufzubauen und ohne Anwendung eines iterativen Verfahrens zu trainieren. Die Art der Verknüpfung und die Form der nichtlinearen Funktion kann in jedem Neuron der Zwischenschicht unterschiedlich sein. Dies ist ein wesentlicher Vorteil bei der Verwendung von Halbleiterbauelementen als Neuronen, da Parameterschwankungen der Bauelemente zulässig, unter Umständen sogar erwünscht sind. Bei der Realisierung eines neuronalen Netzes durch einen Rechner können relativ einfache nichtlineare Funktionen in den Neuronen Verwendung finden, so daß für die Berechnung des neuronalen Netzes eine relativ kurze Rechenzeit benötigt wird. Die nichtlineare Funktion kann auch als Wertetabelle abgelegt werden, wodurch sich ihre Berechnung auf das einfache Auslesen dieser Tabelle reduziert. Wenn die Gewichte und die Offsets in den Neuronen der Zwischenschicht durch ein Zufallsverfahren bestimmt werden, können die Determinante der Matrix $\underline{M}$ des Gleichungssystems

$$\underline{M} \cdot \underline{a} = \underline{y}$$

sehr klein und damit die Gewichte in den Ausgangsneuronen recht groß werden. Dies wirkt sich unter Umständen nachteilig auf die interpolierenden Eigenschaften des neuronalen Netzes zwischen den Stützwerten aus. Zur Vermeidung dieses Effektes wird eine Struktur der Matrix $\underline{M}$ mit bekannter Determinante vorgegeben. Anschließend werden die Parameter der Verknüpfung in den Neuronen der Zwischenschicht derart gewählt, daß die Matrix $\underline{M}$ mit den Stützwerten der Eingangssignale diese Struktur annimmt.

Anhand der Zeichnungen, in denen Ausführungsbeispiele der Erfindung dargestellt sind, werden im folgenden die Erfindung sowie Ausgestaltungen und Vorteile näher erläutert.

Es zeigen:

Figur 1      ein neuronales Netz, eingebettet in seiner Prozeßumgebung,
Figur 2      eine dreischichtige Netzstruktur,
Figur 3      ein Neuron der Zwischenschicht,
Figur 4      ein neuronales Netz mit einem Eingang und einem Ausgang,
Figur 5      ein neuronales Netz mit zwei Eingängen und einem Ausgang,
Figur 6      ein neuronales Netz mit vierschichtiger Netzstruktur,
Figur 7      einen qualitativen Verlauf der sigmoiden Funktion,
Figur 8      einen qualitativen Verlauf des Tangens-Hyperbolikus,
Figur 9      einen qualitativen Verlauf der Glockenkurve und
Figur 10     Stützwerte eines neuronalen Netzes mit zwei Eingängen.

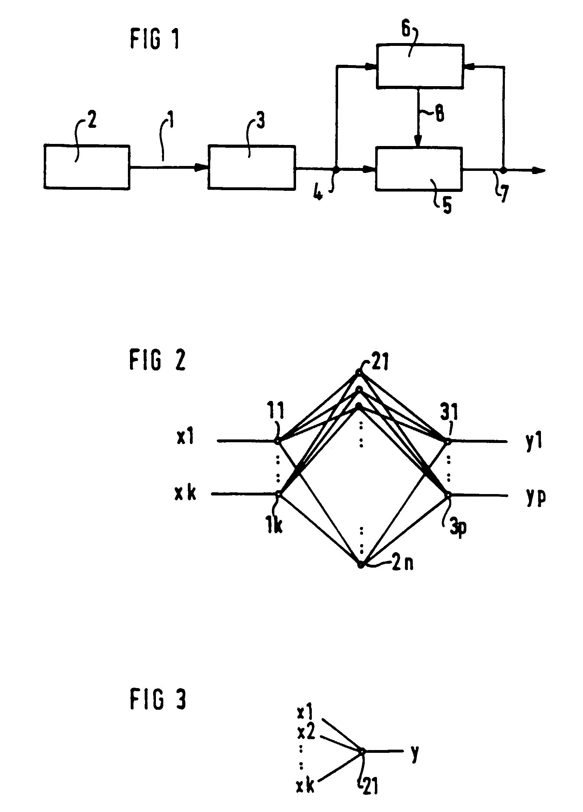

In Figur 1 ist eine Anwendung des erfindungsgemäßen Verfahrens zur lernfähigen Anpassung von Prozeßgrößen 1, die von einem Prozeß 2 ermittelt wurden, dargestellt. In einer Einrichtung zur Eingangssignalvorverarbeitung 3 werden die eingehenden Prozeßgrößen 1 aufbereitet. Dies kann eine min/max-Begrenzung sein, eine Differentiation, eine Integration, ein Schieberegister oder eine Klassifikation, im Prinzip aber auch ein weiteres neuronales Netz, wie es nachfolgend beschrieben wird. Die Einrichtung 3 liefert Eingangsdaten 4 für das neuronale Netz 5, welches im Zusammenspiel mit einer Einrichtung zur Optimierung 6 nach einer lernbaren Funktion angepaßte Prozeßgrößen als Ausgangsdaten 7 erzeugt. Die Einrichtung zur Optimierung 6 dient dazu, das neuronale Netz 5 anhand vorgegebener Stützwerte mit Parametern 8 zu versorgen. Als Stützwert wird eine zusammenhängende Wertekombination von einem oder mehreren Eingangssignalen 4 und einem oder mehreren Ausgangssignalen 7 verstanden. Zwischen den Ein- und Ausgangssignalen 4 und 7 besteht eine unbekannte lineare oder nichtlineare Abbildungsvorschrift. Die Einrichtung 6 zur Optimierung parametriert das neuronale Netz 5 in einer Lernphase so, daß es den Eingangssignalen 4 die gewünschten Ausgangssignale 7 zuordnet. Dabei können zwei Arbeitsweisen unterschieden werden, je nachdem, ob das neuronale Netz 5 Stützwerte interpolieren oder approximieren soll. Soll das neuronale Netz 5 Stützwerte nach der Lernphase reproduzieren und nicht gelernte Ausgangssignale interpolieren, dann muß die Zuordnung exakt erfolgen. Andernfalls approximiert das neuronale Netz 5. Es kann z. B. mit der Methode der linearen Regression anhand der Stützwerte eine Zuordnungsfunktion ermittelt werden, bei der die quadratische Abweichung zwischen den berechneten Ausgangssignalwerten und den vorgegebenen Stützwerten minimal wird.

Das neuronale Netz in Figur 2 ist dreischichtig aufgebaut. Es besteht aus einzelnen Neuronen 11 ... 1k, 21 ... 2n und 31 ... 3p, die netzartig in drei Schichten hintereinander angeordnet sind. Jedes Neuron in einer Schicht ist mit den Ausgängen aller Neuronen in der vorherigen Schicht verbunden. In jeder Schicht muß mindestens ein Neuron vorhanden sein. Die Anzahl k der Eingänge x1 ... xk sowie die Anzahl p der Ausgänge y1 ... yp ist je nach Anwendung frei wählbar. Die Anzahl p der Ausgänge y1 ... yp muß dabei nicht gleich der Anzahl k der Eingänge x1 ... xk sein. Bei neuronalen Netzen mit mehreren Eingängen werden keine einzelnen Werte der Eingangssignale vorgegeben, sondern Eingangsmuster, d. h. zusammengehörige Kombinationen von Werten. Für die Ausgänge gilt Entsprechendes.

Die ursprüngliche Anwendung von neuronalen Netzen ist die Mustererkennung mit dem Ziel, Bilder oder Buchstaben zu erkennen. Ein Bild setzt sich aus einzelnen Pixeln zusammen. Jedes Pixel entspricht dann einem Eingangsneuron. Bei einem Buchstaben werden somit immer mehrere Pixel, d. h. Eingangsneuronen, gleichzeitig angesprochen.

Figur 3 zeigt das Neuron 21 der Zwischenschicht aus Figur 2. Es hat k Eingänge, an denen die Eingangssignale x1 ... xk anliegen, sowie einen Ausgang mit dem Ausgangssignal y. Neuronen können geschachtelte Funktionen bilden. Sie haben eine Eingangsfunktion g(x) und eine Ausgangsfunktion f(g(x)). Die Eingangsfunktion hat k Eingänge, deren Signale x1 ... xk in der Eingangsfunktion gewichtet und miteinander verknüpft werden. Weiterhin kann noch ein konstanter Offset aufaddiert werden. Das Ergebnis der Eingangsfunktion wird in der Ausgangsfunktion nochmals linear oder nichtlinear bewertet. Ein Neuron liefert nur ein Ausgangssignal y.

Die Neuronen 11 ... 1k in der ersten Schicht in Figur 2 bilden den Eingang des neuronalen Netzes. Für jedes zu lernende Eingangssignal x1 ... xk muß ein Eingangsneuron 11 ... 1k vorhanden sein. Die in einer eventuell vorgeschalteten Einrichtung zur Eingangssignalvorverarbeitung aufbereiteten Eingangssignale x1 ... xk werden über die Eingangsneuronen 11 ... 1k an die Neuronen 21 ... 2n in der Zwischenschicht weitergeleitet. Die Neuronen 31 ... 3p in der dritten Schicht bilden den Ausgang des neuronalen Netzes. Für jedes zu lernende Ausgangssignal y1 ... yp muß ein Ausgangsneuron 31 ... 3p vorhanden sein. In der Zwischenschicht können im Prinzip beliebig viele Neuronen 21 ... 2n angeordnet sein. Für ein interpolierendes neuronales Netz müssen in der Zwischenschicht so viele Neuronen 21 ... 2n sein, wie Stützwerte vorgegeben werden. Ist die Anzahl n der Neuronen 21 ... 2n kleiner als die Anzahl der Stützwerte, dann approximiert das neuronale Netz.

Die mathematische Verknüpfung in der Eingangsfunktion g kann eine Summation, Multiplikation oder Division sein. Von der Ausgangsfunktion f wird gefordert, daß sie jedem Eingangswert nur einen Ausgangswert zuordnet. Sie muß nicht überall stetig differenzierbar sein, d. h., sie darf "Sprungstellen" und "Knicke" enthalten, wie bei einer Treppenfunktion. Sie darf auch abschnittsweise linear sein. Die Gewichtung und Verknüpfung der Eingangssignale durch die Eingangsfunktion g bilden den Eingangsteil des Neurons, die nichtlineare Funktion f den Ausgangsteil. Die Art der Verknüpfung und die Form der Nichtlinearität kann in jedem Neuron der Zwischenschicht unterschiedlich sein. Die Ausgangssignale der Neuronen 21 ... 2n in der Zwischenschicht werden an die Neuronen 31 ... 3p in der Ausgangsschicht weitergegeben. Jedes Ausgangsneuron 31 ... 3p ist mit allen Neuronen 21 ... 2n der Zwischenschicht verbunden. Die Signale werden in den Ausgangsneuronen 31 ... 3p wieder gewichtet und miteinander verknüpft. In den Ausgangsneuronen 31 ... 3p ist aber nicht mehr jede Art von Verknüpfung zulässig. Die gewichteten Signale dürfen nur aufaddiert, multipliziert oder dividiert werden. Im Falle der Addition kann noch ein konstanter Wert hinzuaddiert bzw. abgezogen werden. Kombinationen von Summation und Multiplikation bzw. Summation und Division sind hier nicht zulässig. Das Ergebnis dieser Verknüpfung wird entweder direkt ausgegeben oder nochmals mit einer linearen oder nichtlinearen Funktion bewertet. Die Verknüpfung der Signale in den Eingangsfunktionen der Neuronen und die Nichtlinearitäten in den Ausgangsfunktionen sind Eigenschaften des neuronalen Netzes. Das Verfahren zum Entwurf des neuronalen Netzes verändert lediglich die Faktoren, mit denen die Signale gewichtet werden, und die konstanten Werte, die bei der Verknüpfung hinzuaddiert werden. Das neuronale Netz kann sowohl softwaremäßig als Programm oder auch schaltungstechnisch durch diskrete oder integrierte Bauelemente realisiert werden. Im einen Fall stellt z. B. eine nichtlineare Funktion oder eine Wertetabelle die Ausgangsfunktion f dar, im anderen Fall die nichtlineare Eigenschaft der Bauteile (z. B. Dioden).

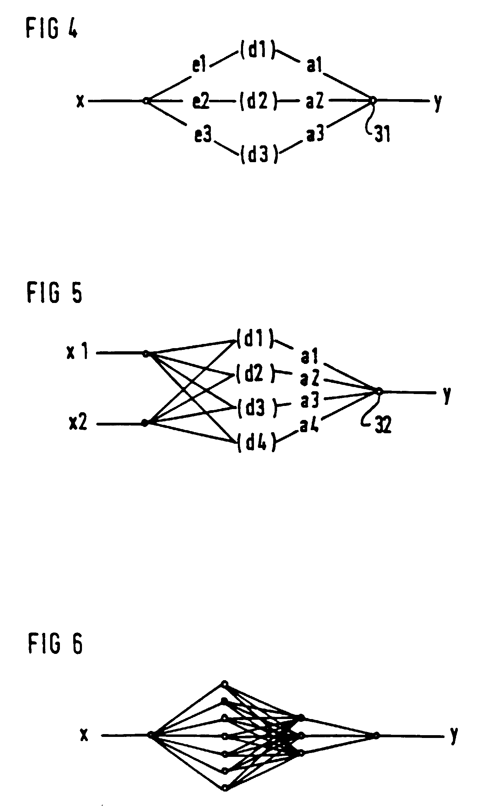

Figur 4 zeigt ein neuronales Netz mit einem Eingangssignal x und einem Ausgangssignal y. In der Zwischenschicht befinden sich drei Neuronen, die jeweils parametrierbar sind durch die Gewichtungsfaktoren e1, e2 und e3 sowie mit den Parametern d1, d2 und d3, die den konstanten Offsets entsprechen, welche in den Neuronen hinzuaddiert werden. Im Ausgangsneuron sind die Gewichtungsfaktoren a1, a2 und a3 einstellbar. Anhand dieses neuronalen Netzes soll nun das Entwurfsverfahren näher erläutert werden. Man hat drei fest eingestellte nichtlineare Funktionen f1, f2 und f3. Diese drei Funktionen sollen nun so zusammengeschaltet werden, daß sie ein Ausgangssignal y bilden, das durch drei vorgegebene Stützwerte verläuft.

Bei einer Verknüpfung durch Addition in dem Ausgangsneuron 31 wird das Ausgangssignal y als gewichtete Summe der Ausgangssignale der drei Neuronen der Zwischenschicht erhalten. Es gilt:

$$y = a1 \cdot f1 \left( g(d1, e1, x) \right) +$$

$$a2 \cdot f2 \left( g(d2, e2, x) \right) +$$

$$a3 \cdot f3 \left( g(d3, e3, x) \right)$$

Diese Funktion soll nun die drei Stützwerte (x1, y1), (x2, y2) und (x3, y3) lernen. Setzt man die Stützwerte in die obige Gleichung ein, so erhält man ein Gleichungssystem von drei Gleichungen für die Werte y1, y2 und y3 des Ausgangssignals y, das sich in Matrizenschreibweise darstellen läßt:

$$\underline{M} \cdot \underline{a} = \underline{y}.$$

Dabei sind die Elemente der Matrix $\underline{M}$ die Ausgangswerte der Neuronen für die verschiedenen Eingangswerte. Es handelt sich dabei um die Ausgangswerte der geschachtelten Funktionen:

$$mij = fj(gj(dj, ej, xi)).$$

Die Variable $i = 1 ... 3$ ist der Zeilenindex und die Variable $j = 1 ... 3$ der Spaltenindex der Matrix $\underline{M}$. Der Vektor $\underline{a}$ ist ein Spaltenvektor und setzt sich aus den Gewichtungsfaktoren a1, a2 und a3 zusammen, während der Spaltenvektor $\underline{y}$ aus den Werten y1, y2 und y3 des Ausgangssignals y besteht. In diesem Gleichungssystem sind die Parameter d1, d2, d3, e1, e2, e3, a1, a2 und a3 die freien Parameter. Man hat also drei Gleichungen und neun Unbekannte. Das Gleichungssystem ist dann eindeutig lösbar, wenn die Matrix $\underline{M}$ invertierbar ist. In diesem Fall ist die Determinante der Matrix $\underline{M}$ von Null verschieden. Die Parameter d1, d2, d3 und e1, e2, e3 werden so vorgegeben, daß diese Bedingung erfüllt ist. Die Lösungen des Gleichungssystems sind die Gewichte in den Neuronen der Ausgangsschicht. Zum Lösen des linearen Gleichungssystems muß die Matrix $\underline{M}$ invertiert werden, denn es gilt:

$$\underline{a} = \underline{M}^{-1} \cdot \underline{y}.$$

Die Lösungen des Gleichungssystems entsprechen dann den gesuchten Parametern a1, a2 und a3. Für die Berechnung der Determinante werden nur die Ausgangswerte der geschachtelten Funktionen für die drei Stützwerte benötigt. Es spielt daher keine Rolle, auf welche Art und Weise die Eingangsfunktionen g gebildet werden und welchen Verlauf die Ausgangsfunktionen f der Neuronen in der Zwischenschicht haben. Ebenfalls spielt für das Aufstellen der Matrix $\underline{M}$ die Stetigkeit oder Differenzierbarkeit der Ausgangsfunktion f keine Rolle. Allerdings ist die Stetigkeit der nichtlinearen Ausgangsfunktion f für den späteren Einsatz des neuronalen Netzes von Bedeutung, wenn das gelernte neuronale Netz nicht gelernte Zwischenwerte der Stützwerte interpolieren soll. Die Stetigkeit ist dann eine wichtige Bedingung für das sogenannte "Generalisieren". Ist die Anzahl der parallelgeschalteten Neuronen in der Zwischenschicht gleich der Anzahl der zu lernenden Stützwerte, so kann das Gleichungssystem exakt gelöst werden. Das Netzwerk interpoliert in diesem Fall. Ist die Anzahl der Stützwerte größer als die Anzahl der Neuronen, dann erhält man ein überbestimmtes Gleichungssystem. Das Netzwerk kann dann nur noch approximieren.

Gibt es mehr Stützwerte als Neuronen, dann erhält man ein überbestimmtes Gleichungssystem. Die Matrix erhält man dann über folgendes Matrixprodukt:

$$\underline{MI} = \underline{M}^T \cdot \underline{M}.$$

$\underline{M}^T$ ist dabei die Transponierte von $\underline{M}$. $\underline{M}$ ist eine nxq-Matrix, d. h., es gibt n Neuronen in der Zwischenschicht und q Stützwerte, wobei q größer als n ist. $\underline{M1}$ ist wieder eine nxn-Matrix.

Die Faktoren kann man dann über eine lineare Regression approximieren:

$$\underline{a} = (\underline{M}^T \cdot \underline{M})^{-1} \cdot \underline{M}^T \cdot y.$$

In diesem Fall wird die quadratische Abweichung zwischen berechnetem Ausgangswert und vorgegebenem Ausgangswert minimiert.

Als Ausgangsfunktion kann z. B. die sigmoide Funktion verwendet werden nach der Formel:

$$mij = \frac{1}{1 + \exp(-(dj + ej \cdot xi))}.$$

Bei neuronalen Netzen mit mehreren Ausgängen muß man für jedes Ausgangsneuron getrennt ein Gleichungssystem aufstellen und lösen. Bei einem Netz mit zwei Ausgängen muß nur eine Matrix invertiert werden, die Ausgangsgewichte werden zweimal berechnet. An den Gewichten und Offsets in der Zwischenschicht ändert sich nichts.

Ein Anwendungsfall für neuronale Netze mit zwei Eingängen und einem Ausgang nach Figur 5 sind z. B. Kennfelder von Motoren. Prinzipiell kann der Entwurf des neuronalen Netzes hier ähnlich durchgeführt werden wie bei dem neuronalen Netz nach Figur 4. Lediglich die Eingangsfunktion gewichtet und verknüpft nun zwei Eingangssignale x1 und x2 statt eines einzelnen Eingangssignals x. Ihre Gewichtungsfaktoren sind in der Figur 5 der Übersichtlichkeit halber nicht dargestellt, sondern lediglich die hinzuaddierten Werte d1 ... d4. Das neuronale Netz weist vier Neuronen in der Zwischenschicht auf, deren Ausgangssignale im Ausgangsneuron mit den Gewichtungsfaktoren a1, a2, a3 und a4 multipliziert und einander überlagert werden. Der Entwurf führt also hier auf ein Gleichungssystem mit vier Gleichungen für diese vier Gewichtungsfaktoren, wenn vier Stützwerte vorgegeben werden. Daraus ist ersichtlich, daß die Zahl der Eingänge keinen Einfluß auf den Rechenaufwand beim Entwurf des neuronalen Netzes hat.

In einem stark überbestimmten neuronalen Netz, d. h., wenn die Anzahl q der Stützwerte wesentlich größer ist als die Anzahl n der Neuronen in der Zwischenschicht, kann der Fall eintreten, daß die Anzahl n der Gewichte in der Zwischenschicht nicht mehr ausreicht, um die q unabhängigen Stützwerte zu erzeugen. Dann muß man die Anzahl der freien Parameter (Gewichte) vergrößern. Dies ist zum einen möglich durch eine Vergrößerung der Anzahl n der Neuronen in der Zwischenschicht und zum anderen durch die Verwendung von komplexeren Eingangsfunktionen mit mehr Parametern in den Neuronen der Zwischenschicht.

Bei der ersten Variante wird die Anzahl der unabhängigen Stützwerte vergrößert. Damit steigt der Rechenaufwand beim Lösen des linearen Gleichungssystems. Die zweite Variante läßt sich dadurch erzeugen, indem man zwischen Eingangs- und Zwischenschicht eine weitere Zwischenschicht mit verborgenen Neuronen einbaut, d. h., man verwendet z. B. ein vierschichtiges neuronales Netzwerk nach Figur 6. Für die Neuronen der nun ersten Zwischenschicht gilt das gleiche wie für die Neuronen der jetzt zweiten Zwischenschicht. Formal unterscheiden sich diese beiden Schichten nicht. Jedes Neuron der zweiten Zwischenschicht ist mit allen Neuronen der neuen ersten Zwischenschicht verbunden. Diese zusätzliche Zwischenschicht sorgt dafür, daß die Eingangsfunktionen der Neuronen in der zweiten Zwischenschicht wesentlich komplexer werden. Damit erhält man zusätzliche Freiheitsgrade für die Normierung.

Prinzipiell können die Parameter der Neuronen in der Zwischenschicht willkürlich, durch gezieltes Probieren oder auch mit einem Optimierungsalgorithmus ermittelt werden. Zielfunktion ist die Determinante der Matrix zur Lösung des Gleichungssystems.

Im folgenden soll beschrieben werden, wie die Gewichte und Offsets der Neuronen in der Zwischenschicht vorbelegt werden können, damit die Determinante der Matrix $\underline{M}$ nicht zu klein und die Gewichte der Ausgangsneuronen nicht zu groß werden. Dies kann erreicht werden, indem man für die Matrix $\underline{M}$ eine Struktur derart vorgibt, daß sie leicht invertierbar ist, und indem die gesuchten Gewichte und Offsets der Neuronen in der Zwischenschicht in Abhängigkeit von den Stützwerten der Eingangssignale mit einem Koeffizientenvergleich zur Erzeugung dieser Struktur berechnet werden. Dabei ist die Anzahl q der Stützwerte gleich der Anzahl n der Neuronen in der Zwischenschicht zu wählen. Drei vorteilhafte Strukturen sollen hier angegeben werden:

erste Struktur:

$$
\underline{M1} \quad = \quad
\begin{bmatrix}
1 & 1 & 1 & \cdots & 1 & 1 \\
0 & 1 & 1 & & 1 & 1 \\
0 & 0 & 1 & & 1 & 1 \\
\vdots & & & & & \vdots \\
\vdots & & & & & \vdots \\
0 & 0 & 0 & & 1 & 1 \\
0 & 0 & 0 & \cdots & 0 & 1
\end{bmatrix}
$$

Die Elemente auf der Diagonalen und darüber haben den Wert Eins. Die Elemente unterhalb der Diagonalen haben den Wert Null.

Die Determinante hat den Wert : det $(\underline{M}1) = 1$.

Die Inverse lautet:

$$
\underline{M1}^{-1} \quad = \quad
\begin{bmatrix}
1 & -1 & 0 & \cdots & 0 & 0 \\
0 & 1 & -1 & & 0 & 0 \\
0 & 0 & 1 & & 0 & 0 \\
\vdots & & & & & \vdots \\
\vdots & & & & & \vdots \\
0 & 0 & 0 & & 1 & -1 \\
0 & 0 & 0 & \cdots & 0 & 1
\end{bmatrix}
$$

Die exakte Lösung des Gleichungssystems lautet dann:

$$
\begin{bmatrix} a1 \\ a2 \\ a3 \\ : \\ : \\ aq \end{bmatrix} = \begin{bmatrix} y1 - y2 \\ y2 - y3 \\ y3 - y4 \\ : \\ : \\ yq \end{bmatrix}
$$

zweite Struktur:

$$
\underline{M2} = \begin{bmatrix}
1 & 1 & 1 & \dots & 1 & 1 \\
-1 & 1 & 1 & & 1 & 1 \\
-1 & -1 & 1 & & 1 & 1 \\
: & & & & & : \\
: & & & & & : \\
-1 & -1 & -1 & \dots & 1 & 1 \\
-1 & -1 & -1 & \dots & -1 & 1
\end{bmatrix}
$$

Die Elemente auf der Diagonalen und darüber haben den Wert Eins. Die Elemente unterhalb der Diagonalen haben den Wert -1.

Die Determinante hat den Wert : det $(\underline{M2}) = 2^{(q-1)}$.

Die Inverse lautet:

$$
\underline{M2}^{-1} = \begin{bmatrix}
0.5 & -0.5 & 0 & \dots & 0 & 0 \\
0 & 0.5 & -0.5 & & 0 & 0 \\
0 & 0 & 0.5 & & 0 & 0 \\
: & & & & & : \\
: & & & & & : \\
0 & 0 & 0 & & 0.5 & -0.5 \\
0.5 & 0 & 0 & \dots & 0 & 0.5
\end{bmatrix}
$$

Die exakte Lösung des Gleichungssystems lautet dann:

$$
\begin{bmatrix} a1 \\ a2 \\ a3 \\ : \\ : \\ aq \end{bmatrix} = 0.5 \cdot \begin{bmatrix} y1 - y2 \\ y2 - y3 \\ y3 - y4 \\ : \\ : \\ y1 + yq \end{bmatrix}
$$

dritte Struktur (Einheitsmatrix):

$$\underline{M3} = \begin{bmatrix} 1 & 0 & 0 & .... & 0 & 0 \\ 0 & 1 & 0 & & 0 & 0 \\ 0 & 0 & 1 & & 0 & 0 \\ : & & & & & : \\ : & & & & & : \\ 0 & 0 & 0 & & 1 & 0 \\ 0 & 0 & 0 & .... & 0 & 1 \end{bmatrix}$$

Die Elemente auf der Diagonalen haben den Wert Eins. Die übrigen Elemente haben den Wert Null.
Die Determinante hat den Wert : det $(\underline{M3}) = 1$.
Die Inverse lautet:

$$\underline{M3}^{-1} = \underline{M3} = \begin{bmatrix} 1 & 0 & 0 & .... & 0 & 0 \\ 0 & 1 & 0 & & 0 & 0 \\ 0 & 0 & 1 & & 0 & 0 \\ : & & & & & : \\ : & & & & & : \\ 0 & 0 & 0 & & 1 & 0 \\ 0 & 0 & 0 & .... & 0 & 1 \end{bmatrix}$$

Die exakte Lösung des Gleichungssystems lautet dann:

$$\begin{bmatrix} a1 \\ a2 \\ a3 \\ : \\ : \\ aq \end{bmatrix} = \begin{bmatrix} y1 \\ y2 \\ y3 \\ : \\ : \\ yq \end{bmatrix}$$

Für diese Strukturen können die dazugehörigen Inversen direkt angegeben werden. Daraus können dann auch die Ausgangsgewichte direkt berechnet werden.

Hat ein Ausgangsgewicht den Wert Null, so kann das dazugehörige Neuron der Zwischenschicht weggelassen werden, weil es nicht mit dem Ausgangsneuron verbunden ist. In diesem Fall wird das neuronale Netz ausgedünnt.

Die erste Struktur ist bei einem neuronalen Netz vorteilhaft anwendbar, dessen nichtlineare Elemente in den Neuronen der Zwischenschicht einer sigmoiden Funktion ähnlich sind, während sich die zweite Struktur besonders für nichtlineare Elemente mit einem Verhalten entsprechend der Tangens-Hyperbolikus-Funktion eignet.

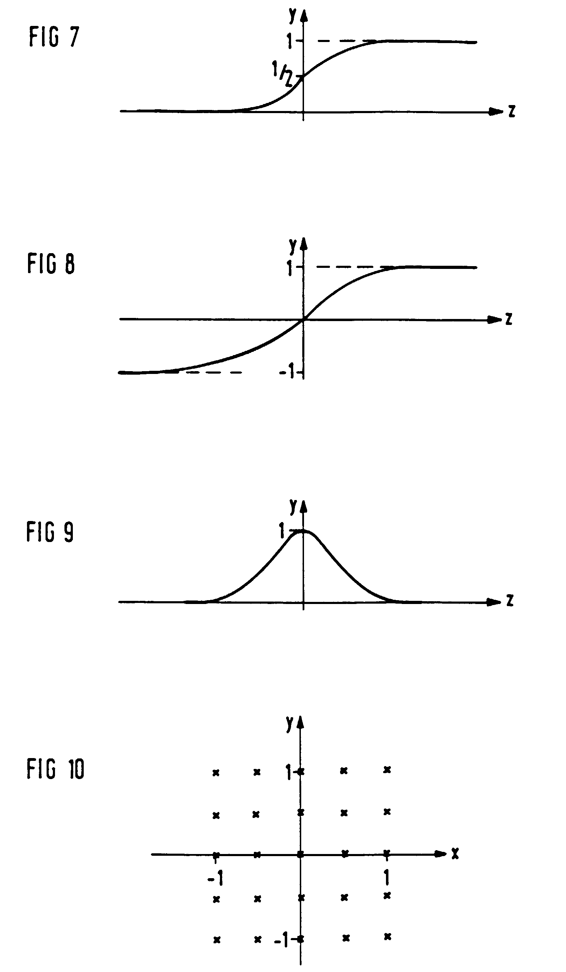

In Figur 7 ist der prinzipielle Verlauf der sigmoiden Funktion

$$y = \frac{1}{1 + \exp(-z)}$$

dargestellt. Der Wert der Eingangsfunktion g(x) wird hier als z bezeichnet. Bei großen positiven Werten von z nähert sich die Funktion asymptotisch dem Begrenzungswert Eins, bei großen negativen Werten dem Wert Null. Dazwischen hat die sigmoide Funktion einen S-förmigen Verlauf. Sie ist punktsymmetrisch bezüglich dem Punkt $(z, y) = (0, 0.5)$, d. h. $y(z) = 1 - y(-z)$.

Figur 8 zeigt den qualitativen Verlauf des Tangens-Hyperbolikus mit

$$y = \frac{\exp(2z) - 1}{\exp(2z) + 1}$$

dessen Funktionswerte sich bei großen positiven Werten asymptotisch dem Begrenzungswert Eins, bei großen negativen Werten dem Begrenzungswert -1 nähern. Die Tangens-Hyperbolikus-Funktion hat dazwischen ebenfalls einen S-förmigen Verlauf. Sie ist punktsymmetrisch bezüglich dem Koordinatenursprung, d. h. $y(z) = -y(-z)$.

Bei gleichen Gewichten $e_i$ und Offsets $d_i$ der Neuronen in der Zwischenschicht wären die Spalten der Matrix $\underline{M}$ linear abhängig. Damit das Gleichungssystem lösbar ist, müssen die Spalten durch geeignete Wahl der Gewichte $e_i$ und Offsets $d_i$ linear unabhängig werden. Werden dazu Zufallszahlen verwendet, so kann das Gleichungssystem zwar im allgemeinen numerisch gelöst werden, aber die Ausgangsgewichte werden in einigen Fällen sehr groß. Dies ist dann ein Zeichen dafür, daß die lineare Abhängigkeit der Spalten dabei noch sehr groß war.

Das Eingangssignal $x$ wird auf den Wertebereich $-1 \leq x \leq 1$ normiert. Weiterhin wird hilfsweise zur Aufstellung der Matrix $\underline{M}$ davon ausgegangen, daß die Stützwerte $x_i$ gleichverteilt aus dem vorhandenen Wertebereich kommen, um die Gewichte $e_i$ und Offsets $d_i$ sinnvoll vorbelegen zu können. D. h., es werden Hilfsgrößen $x_i'$ für die Eingangssignale $x_i$ entsprechend der Formel

$$x_i' = 1 - 2 \cdot \frac{i-1}{q-1}$$

eingeführt. Es ist zu betonen, daß die Hilfsgrößen $x_i'$ lediglich zur Ermittlung der Gewichte $e_i$ und der Offsets $d_i$ verwendet werden. Zur Lösung des Gleichungssystems $\underline{M} \cdot \underline{a} = \underline{y}$ werden dagegen die Stützwerte $(x_i, y_i)$ herangezogen.

Die erste Zeile von $\underline{M}$ enthält somit die Ausgangssignale der Neuronen der Zwischenschicht für $x_1'$ (=1 wegen der Gleichverteilung), die zweite Zeile die Werte für $x_2'$, ..., und die letzte Zeile enthält die Werte für $x_q'$ (= -1 wegen der Gleichverteilung).

Zur Bestimmung der Gewichte $e_i$ und Offsets $d_i$ ergeben sich aus der ersten und zweiten Struktur der Matrix $\underline{M}$ die folgenden Regeln:

(1) - Die Elemente auf und oberhalb der Diagonalen müssen nahe beim positiven Begrenzungswert liegen und
(2) - die Elemente unterhalb der Diagonalen müssen nahe beim unteren Grenzwert sein (bei einer Nichtlinearität mit sigmoider Funktion: 0, mit Tangens-Hyperbolikus: -1).

Daraus können die folgenden beiden Formeln abgeleitet werden:

$$f(d_i + e_i \cdot x_i') = 1 \text{ und}$$

$$f(d_i + e_i \cdot x(i+1)') = 0 \text{ für sigmoide Funktion}$$

oder

$$f(d_i + e_i \cdot x(i+1)' = -1 \text{ für Tangens-Hyperbolikus.}$$

Nach Auflösung erhält man daraus:

$$d_i + e_i \cdot x_i' = f^{-1}(1) = GW,$$

$$d_i + e_i \cdot x(i+1)' = f^{-1}(0 \text{ bzw. } -1) = -GW.$$

Die Funktionen sigmoid und Tangens-Hyperbolikus sind symmetrisch. Das bedeutet, daß der Abstand zum asymptotischen oberen Grenzwert bei $f(GW)$ demjenigen zum unteren Grenzwert bei $f(-GW)$ gleich ist. Der Wert GW in den Gleichungen wird so gewählt, daß der Abstand gering wird. Dies ist etwa der Fall bei $GW = 9$ für die sigmoide Funktion und $GW = 5$ für den Tangens-Hyperbolikus. Die beiden obengenannten Gleichungen können nach $e_i$ und $d_i$ aufgelöst werden zu:

$$e_i = GW \cdot (q-1) \text{ und}$$

$$d_i = GW \cdot (2 \cdot i - q).$$

Die Eingangsgewichte $e_i$ haben also alle den gleichen Wert. Die Offsets $d_i$ sind in den Neuronen unterschiedlich. Der Wertebereich des Eingangssignals $x$ wird durch die Neuronen der Zwischenschicht in Teilbereiche unterteilt. Je nachdem, welchen Wert das Eingangssignal $x$ gerade hat, sind die Neuronen der Zwischenschicht entweder nahe beim positiven oder negativen Grenzwert.

Der Wert GW beeinflußt die Interpolationseigenschaften des neuronalen Netzes. Bei $GW = 9$ (bzw. 5) erhält man einen treppenförmigen Kurvenverlauf mit sehr scharfen Übergängen, weil die Ausgangssignale der Neuronen der Zwischenschicht entweder beim oberen oder beim unteren Grenzwert liegen. Verringert man den Wert GW, so gibt es keinen so scharfen Übergang mehr, sondern es entsteht ein gleitender Übergang mit Zwischenwerten. Allerdings ent-

spricht die Matrix $\underline{M}$ dann nicht mehr der vorgegebenen idealen Struktur. Die Ausgangsgewichte müssen nun numerisch ermittelt werden. Dafür wird der Kurvenverlauf glatter und die Interpolationseigenschaften des neuronalen Netzes verbessern sich. Als besonders günstig hat sich bei nichtlinearen Elementen mit sigmoider Funktion der Wertebereich $0.5 < GW < 2$ und für nichtlineare Elemente mit Tangens-Hyperbolikus der Wertebereich $0.2 < GW < 1$ erwiesen. Wird GW aus diesen Bereichen gewählt, so hat das neuronale Netz gute Interpolationsfähigkeiten bei zuverlässiger Berechnung der Gewichte ai der Ausgangsneuronen.

Für die dritte angegebene Struktur der Matrix $\underline{M}$, die ähnlich der Einheitsmatrix ist, können vorteilhaft nichtlineare Elemente mit dem Verlauf einer Glockenkurve in den Neuronen der Zwischenschicht eingesetzt werden.

Der qualitative Verlauf einer Glockenkurve ist in Figur 9 dargestellt. Die Formel einer derartigen Glockenkurve lautet:

$$y = e^{-(z/b)^2}$$

Diese Funktion hat ein ausgeprägtes Maximum bei $z = 0$ mit dem Funktionswert $f(0) = 1$. Für große wie auch für kleine Werte von z nähert sich die Funktion asymptotisch dem Wert 0. Für $z = b$ erhält man als Funktionswert $y(b) = \exp(-1) \approx 0.368$. D. h., im Abstand b von der Ordinate ist der Ausgabewert der Funktion auf ca. ein Drittel gefallen. Die Funktion ist symmetrisch bezüglich der Ordinate, d. h. $y(z) = y(-z)$.

Um unter Verwendung einer Glockenkurve als nichtlineares Element in den Neuronen der Zwischenschicht eine Matrix $\underline{M}$ der dritten Struktur zu erhalten, müssen folgende Regeln angewendet werden:

(1) - Die Elemente auf der Diagonalen müssen dem Maximalwert Eins entsprechen und
(2) - ober- und unterhalb der Diagonalen müssen die Elemente nahe dem Grenzwert Null liegen.

Mit der Eingangsverknüpfung $z = e \cdot x + d$ in den Neuronen der Zwischenschicht kann daraus die Gleichung abgeleitet werden:

$$di = -ei \cdot xi'.$$

Aus der zweiten Regel folgt für die nicht auf der Diagonale liegenden Elemente:

$$\exp\left(- \left(\frac{ei \cdot x(i+1)' + di}{b}\right)^2\right) \approx 1.0\ e\text{-}50$$

$$b \approx \frac{ei \cdot x(i+1)' + di}{sqrt(-1n(1.0\ e\text{-}50))}$$

$$b \approx \pm 0.2 \cdot \frac{ei}{q\text{-}1}$$

Wegen der Symmetrie der Glockenkurve gilt diese Berechnung sowohl für die Elemente oberhalb als auch unterhalb der Diagonalen.

Die Eingangsgewichte werden alle auf den Wert Eins gesetzt, dann erhält man:

$$ei = 1$$

$$di = -1 + 2 \cdot (i-1) / (q\text{-}1) = -xi'$$

$$b = 0.2 / (q\text{-}1)$$

Der Kurvenverlauf dieses neuronalen Netzes ist eine Folge von Glockenkurven. Diese Kurven sind sehr schmal; die Flanken fallen steil zu Null hin ab. Die Kurven entsprechen daher mehr "Nadelimpulsen". Die Spitzen der Kurven entsprechen den gelernten Stützwerten. Das neuronale Netz hat daher schlechte Interpolationseigenschaften. Bei Eingangssignalen zwischen den Stützwerten wird vom neuronalen Netz näherungsweise Null ausgegeben. Die Interpolationseigenschaften sind aber mit dem Faktor b veränderbar. Je größer b wird, desto breiter werden die einzelnen Glockenkurven, bis sie sich überlappen und das neuronale Netz auch zwischen den Stützwerten geeignete Ausgangswerte liefert. Damit geht aber gleichzeitig der scharfe Übergang von Null nach Eins im Bereich der Diagonalen der Matrix $\underline{M}$ verloren und die Matrix $\underline{M}$ verliert ihre ideale Struktur. Man erhält nun sogenannte "Bandmatrizen":

$$
\begin{bmatrix}
1 & x & & & & & & & \\
x & 1 & x & & & & \approx 0 & & \\
 & x & 1 & x & & & & & \\
 & & x & 1 & x & & & & \\
 & & & x & 1 & x & & & \\
 & & & & x & 1 & x & & \\
 & & & & & x & 1 & x & \\
 & \approx 0 & & & & & x & 1 & x \\
 & & & & & & & x & 1
\end{bmatrix}
$$

Je größer b wird, desto breiter wird das "Band".

Besonders gute Interpolationseigenschaften bei zuverlässiger Berechnung der Gewichte ai in den Ausgangsneuronen werden erreicht, wenn für b Werte aus dem Bereich 1 / (q-1) < b < 3 / (q-1) gewählt werden.

Die Vorgabe einer geeigneten Struktur für die Matrix <u>M</u> liefert also eine analytische Einstellvorschrift für die Gewichte ei und die Offsets di der Neuronen der Zwischenschicht im neuronalen Netz. Die Interpolationseigenschaften sind allerdings mit dieser Einstellung zunächst eher ungünstig. Sie können aber durch Ändern von vorteilhaft nur einem Parameter (GW bzw. b) verändert werden. Dadurch weicht die Matrix <u>M</u> von der vorgegebenen idealen Struktur ab und die Ausgangsgewichte ai müssen numerisch berechnet werden. Aufgrund der Einstellvorschrift ergeben sich dabei aber keine numerischen Probleme. Die numerische Lösung liefert auch bei überbestimmten Gleichungssystemen, z. B., wenn es mehr Stützwerte als Neuronen der Zwischenschicht gibt, sinnvolle Ergebnisse. Wird GW zu stark verringert bzw. b zu sehr vergrößert, so nähern sich die Zeilen der Matrix <u>M</u> der linearen Abhängigkeit, und die Ausgangsgewichte ai in den Neuronen der Ausgangsschicht werden größer.

Wenn die Matrix <u>M</u> nach der Bestimmung der Gewichte ei und der Offsets di anhand der äquidistanten Hilfsgrößen für die Lerndaten aufgestellt wird, kann es zu Abweichungen von der idealen Struktur kommen, falls diese Lerndaten nicht äquidistant sind. Es hat sich aber gezeigt, daß die numerisch günstigen Eigenschaften dieser Einstellvorschrift erhalten bleiben.

Im allgemeinen ist ein Offset im Ausgangsneuron nicht notwendig. Soll aber dennoch ein Offset d mitberechnet werden, so muß das Gleichungssystem folgendermaßen erweitert werden:

$$
m11 . a1 + m12 . a2 + m13 . a3 + d = y1
$$

$$
m21 . a1 + m22 . a2 + m23 . a3 + d = y2
$$

$$
m31 . a1 + m32 . a2 + m33 . a3 + d = y3
$$

in Matrixschreibweise:

$$
\begin{bmatrix}
m11 & m12 & m13 & 1 \\
m21 & m22 & m23 & 1 \\
m31 & m32 & m33 & 1
\end{bmatrix}
.
\begin{bmatrix}
a1 \\
a2 \\
a3 \\
d
\end{bmatrix}
=
\begin{bmatrix}
y1 \\
y2 \\
y3
\end{bmatrix}
$$

Die Matrix <u>M</u> wird also um eine Spalte mit Elementen mit dem Wert "1" und der Lösungsvektor um den gesuchten Offset d erweitert. Das Gleichungssystem hat nun mehr Parameter als Stützwerte, es kann aber dennoch mit Methoden der Näherung gelöst werden.

Es soll nun ein neuronales Netz mit zwei Eingängen x und y betrachtet werden. Die Lerndaten haben die Form (x, y, z). Jeder Eingang wird auf den Wertebereich 1 ... -1 normiert. Aus diesem Wertebereich werden wiederum gleichverteilte Hilfsgrößen xi' und yi' für die Eingangssignale x bzw. y gebildet:

$$
xi' = 1 - 2 . (i-1) / (q-1)
$$

$$
yi' = 1 - 2 . (i-1) / (q-1)
$$

Die so hilfsweise eingeführten Wertepaare (xi', yi') für die Eingangssignale des neuronalen Netzes ergeben sich dann durch Kombination der Hilfsgrößen xi' und yi' der Eingänge. Werden von jedem Eingang q Hilfsgrößen gebildet, so ergeben sich hier $q^2$-Kombinationen. Jedes dieser Wertepaare deckt einen Teilbereich des zweidimensionalen Eingangsraumes ab. Die Netze werden also sehr groß, weil hier pauschal der gesamte Eingangsraum abgedeckt wird, unabhängig von der tatsächlichen Verteilung der Lerndaten.

Jedes dieser Wertepaare erfordert ein Neuron in der Zwischenschicht. Sollen mit diesem Netz dann n-Lerndaten gelernt werden, so erhält die Matrix $\underline{M}$ die Größe n x $q^2$. Für eine quadratische Matrix $\underline{M}$ benötigt man somit n = $q^2$ Lerndaten. Bei mehr Lerndaten erhält man ein überbestimmtes Gleichungssystem. Das neuronale Netz bildet dann eine Ausgleichsfunktion, bei der der quadratische Fehler minimiert wird.

Beispielsweise soll bei einem neuronalen Netz mit zwei Eingängen jeder Eingang durch fünf äquidistante Hilfsgrößen in vier Teilabschnitte unterteilt werden. Die Kombinationen dieser Hilfsgrößen liefern die Stützwerte für den zweidimensionalen Eingangsraum. Man erhält so ein Gitter von 25 Stützwerten gemäß Figur 10.

Für das Aufstellen des Gleichungssystems werden mindestens 25 Lerndaten benötigt. Die Matrix $\underline{M}$ hat dann die Dimension 25 x 25. Es müssen bei mehrdimensionalen neuronalen Netzen sehr große Gleichungssysteme gelöst werden. Beim Lernen eines "Mexikanischen Hutes" (= sin(z)/z mit z = 8 . sqrt($x^2+y^2$)) mit sogenannten "radial-basis-Funktionen" (siehe unten) ist eine Matrix mit etwa q = 10 notwendig.

Das Lernen von Stützwerten bei zweidimensionalen neuronalen Netzen soll nun für die radial-basis-Funktion als nichtlinearem Element erläutert werden. Die radial-basis-Funktion hat einen glockenförmigen Verlauf gemäß der Formel:

$$f(x, y) = \exp\left(-\frac{(x - x0)^2 + (y - y0)^2}{b^2}\right)$$

Mit den Lerndaten (xi, yi, zi) wird wieder ein Gleichungssystem aufgestellt. Gibt es genausoviele Stützwerte wie Neuronen in der Zwischenschicht, dann erhält man eine quadratische Matrix $\underline{M}$. Diese Matrix soll die Diagonalstruktur erhalten, d. h., nur die Diagonalelemente sollen den Wert Eins haben. Im Diagonalelement erhält man für ein Eingangswertepaar (x1', y1') folgende Gleichung:

$$\exp\left(-\frac{(x1' - x0)^2 + (y1' - y0)^2}{b^2}\right) = 1$$

$$(x1' - x0)^2 + (y1' - y0)^2 = 0$$

Daraus folgt:

$$x0 = x1' \text{ und } y0 = y1'$$

Für jedes Wertepaar wird somit ein Neuron in der Zwischenschicht benötigt. Für ein Wertepaar (xj', yi') erhält man dabei die Einstellvorschrift:

$$f(x, y) = \exp\left(-\frac{(x - xj')^2 + (y - yi')^2}{b^2}\right)$$

Der Faktor b beeinflußt dabei wieder die Interpolationseigenschaften bei Zwischenwerten. Je nachdem, wie weit ein Eingangs-Lernwert von den Wertepaaren eines Neurons entfernt ist, hat der Ausgang des Neurons einen Wert zwischen Null und Eins. Bei einer beliebigen Verteilung der Lerndaten erhält man so "dünnbesetzte" Matrizen mit einer mehr oder weniger ausgeprägten Diagonalstruktur. Dieses Verhalten kann man ausnutzen, um das Netz zu verkleinern. Neuronen, die in der Matrix $\underline{M}$ eine Spalte nur mit Nullen oder sehr kleinen Werten liefern, kann man weglassen.

Bei einem neuronalen Netz mit k Eingängen wird jeder Eingang für sich in q äquidistante Hilfsgrößen unterteilt. Die Werte-k-Tupel für das neuronale Netz ergeben sich somit wieder durch Kombination der Hilfsgrößen der einzelnen Eingänge. Man erhält dadurch $q^k$ Werte-k-Tupel für das mehrdimensionale neuronale Netz. Jedes dieser Werte-k-Tupel deckt einen Teilbereich des k-dimensionalen Eingangsraumes ab. Die Netze werden also sehr groß, weil hier pauschal der gesamte Eingangsraum abgedeckt wird - unabhängig von der tatsächlichen Verteilung der Lerndaten.

Jedes dieser Werte-k-Tupel erfordert ein Neuron in der Zwischenschicht. Sollen mit diesem Netz n Lerndaten gelernt werden, so erhält die Matrix $\underline{M}$ die Größe n x $q^k$. Für eine quadratische Matrix $\underline{M}$ benötigt man somit n = $q^k$ Lerndaten. Bei mehr Lerndaten erhält man ein überbestimmtes Gleichungssystem. Das neuronale Netz bildet dann eine Ausgleichsfunktion, bei der der quadratische Fehler minimiert wird.

Der Vorteil der radial-basis-Funktionen liegt wieder darin, daß man die Werte-k-Tupel zunächst unabhängig von den Ausgangswerten festlegen kann. Die Anzahl q bestimmt dabei die Auflösung und damit die Genauigkeit der Approximation. Der Nachteil liegt darin, daß die Netze sehr groß werden können.

Bei den übrigen nichtlinearen Funktionen werden in der Eingangsfunktion die Eingangssignale linear überlagert; dadurch ergeben sich Mehrdeutigkeiten, welche die Berechnung erschweren.

Wenn davon ausgegangen wird, daß die Lerndaten nur in einem Teilbereich des k-dimensionalen Eingangsraumes liegen, so kann man durch folgende Vorgehensweise für Neuronen mit radial-basis-Funktionen zu einem kleineren Netz kommen:

- Bei einem neuronalen Netz mit k Eingängen werden von jedem Eingangssignal, wie oben beschrieben, q Hilfsgrößen gebildet, je nach gewünschter Auflösung.
- Diese Hilfsgrößen werden alle miteinander kombiniert. Diese Kombinationen bilden die Werte-k-Tupel des k-dimensionalen Eingangsraumes.
- Diese Werte-k-Tupel liefern die Parameter der radial-basis-Funktionen. Es gibt damit zunächst so viele Neuronen in der Zwischenschicht wie Werte-k-Tupel.
- Es werden nun nacheinander für jeden Eingangs-Lerndatensatz die Ausgangswerte aller Neuronen berechnet. Die Ausgangswerte werden aufsummiert. Ist das Ergebnis Null oder sehr klein, so wird das Neuron aussortiert. Es bleiben damit nur solche Neuronen übrig, bei denen die Lerndaten in der Nähe der Werte-k-Tupel liegen. Auf diese Weise erhält man noch zusätzlich einen Überblick über die relevanten Werte-k-Tupel.
- Mit diesen Neuronen wird dann das Gleichungssystem aufgestellt und gelöst. Verwendet man genausoviele Neuronen wie Lerndaten, dann können die Lerndaten exakt gelernt werden; verwendet man weniger Neuronen als Lerndaten, dann bildet das neuronale Netz ein mehrdimensionales Ausgleichspolynom.

Alternativ können die relevanten Werte-k-Tupel auch ermittelt werden, wenn man für jeden Eingang eine Häufigkeitsverteilung aufstellt. Dazu wird jeder Eingang in Teilbereiche aufgeteilt. Die Anzahl der Bereiche richtet sich nach der gewünschten Genauigkeit. Es wird nun ermittelt, wieviele Lerndaten in welchem Teilbereich liegen. Heben sich hier einzelne Teilbereiche heraus, dann kann man die Mittelwerte dieser Teilbereiche als Werte-k-Tupel für die radial-basis-Funktionen verwenden. Die Breite der Teilbereiche liefert einen Hinweis zur Wahl von b.

Weiterhin ist noch eine "Vorverarbeitung" der Lerndaten vorteilhaft, bei welcher ein sehr großer Datensatz mit Lerndaten auf einen kleineren repräsentativen Datensatz reduziert wird.

Mit dieser Entwurfsvorschrift kann man die Größe des neuronalen Netzes an die zu lernende Funktion anpassen. Die Netze sind dabei immer noch größer als bei Verwendung der übrigen Funktionen (sigmoid, tanh, Glockenkurve), dafür ist der Entwurf aber sicherer, weil bei neuronalen Netzen mit radial-basis-Funktionen die Zuordnung Eingangswert zu Ausgangswert von weniger Parametern abhängt.

Durch das erfindungsgemäße Entwurfsverfahren ist man nicht mehr auf neuronale Netze mit speziellen Neuronentypen beschränkt, wie es beim Backpropagation-Verfahren der Fall war, sondern man kann auch neuronale Netze mit allgemeineren Neuronentypen verwenden.

Die Neuronen in der Zwischenschicht müssen nicht unbedingt als Eingangsfunktion eine Summation bilden und als Ausgangsfunktion den Tangens-Hyperbolikus oder die sigmoide Funktion besitzen. Im Prinzip sind bei den Neuronen beliebige Eingangsfunktionen, also auch Produkte und Divisionen, und auch beliebige Ausgangsfunktionen möglich. Die einzige Anforderung für einen sinnvollen Entwurf ist, daß der Ausgangswert der Neuronen nicht völlig linear von den Eingangsgrößen abhängt. Die Nichtlinearität darf dabei jedem Eingangswert nur einen Ausgangswert zuordnen. Wenn die Bedingungen für die Nichtlinearität schon durch die Verknüpfung in der Eingangsfunktion erfüllt sind, dann kann die Ausgangsfunktion auch linear sein. Die Neuronen in der Zwischenschicht müssen jetzt auch nicht mehr die gleiche Eingangs- und Ausgangsfunktion haben, sondern die Funktionen können in den Neuronen verschieden sein. Die Gewichtungsfaktoren in den Eingangsfunktionen der Neuronen der Zwischenschicht und die Parameter der Nichtlinearität müssen so gewählt werden, daß aus q Stützwerten n linear unabhängige Gleichungen aufgestellt werden können.

Die Eingangsfunktionen in den Neuronen der Ausgangsschicht müssen so geartet sein, daß man jeweils ein Gleichungssystem aufstellen kann. Die gewichteten Eingangssignale dieser Neuronen müssen entweder durch eine Addition, Multiplikation oder Division verknüpft werden. Im Falle einer Multiplikation oder Division erhält man das Gleichungssystem durch Logarithmieren. Es muß dann aber darauf geachtet werden, daß die normierten Stützwerte der Ausgabesignale der Zwischenschicht und die zu lernenden Ausgangswerte positiv sind. Bei negativen Ausgangswerten muß in den Ausgangsneuronen noch eine weitere lineare oder nichtlineare Ausgangsfunktion implementiert werden, welche die negativen Ausgangswerte auf interne positive Ausgangswerte abbildet. Durch Logarithmieren erhält man unter den angegebenen Voraussetzungen aus einer Verknüpfung

$$y = a1 . f1 . a2 . f2 . a3 . f3 . a4 . f4$$

die Gleichung:

$$1n(y) = 1n(a1f1) + \ldots + 1n(a4f4).$$

Mit derartigen Gleichungen kann wiederum in der bereits beschriebenen Weise ein lineares Gleichungssystem aufgestellt und gelöst werden.

Für ein Neuron in der Ausgangsschicht mit z. B. drei Eingängen, an denen die Signale f1 ... f3 anliegen, den Gewichtungsfaktoren a1 ... a3 und einer sigmoiden Ausgangsfunktion erhält man das Gleichungssystem folgendermaßen:

$$\frac{1}{1 + \exp(-(a1f1 + a2f2 + a3f3 - d))} = y.$$

Durch beidseitige Kehrwertbildung, Subtrahieren von 1 und Logarithmieren erhält man daraus die Gleichung:

$$d - a1f1 - a2f2 - a3f3 = \ln(1/y - 1.0).$$

Mit den Lerndaten werden verschiedene Kombinationen der Ein- und Ausgangswerte festgelegt. Die Werte f1, f2 und f3 sind dabei die Ausgangswerte von Neuronen der Zwischenschicht. Man kann dann durch Logarithmieren ein lineares Gleichungssystem aufstellen und die Parameter d, a1, a2 und a3 wieder in der bereits beschriebenen Weise ermitteln.

**Patentansprüche**

1. Verfahren zum Entwurf eines neuronalen Netzes, das mindestens einen Eingang und mindestens einen Ausgang sowie Neuronen in mehreren hintereinander angeordneten Schichten aufweist, wobei in den Neuronen einer Zwischenschicht Eingangssignale zunächst gewichtet, dann miteinander verknüpft und mit einem nichtlinearen Element ein Ausgangssignal gebildet wird und jedem Ausgang der Ausgangsschicht des neuronalen Netzes ein Ausgangsneuron zugeordnet ist, auf welches die Ausgangssignale der Neuronen der vorhergehenden Schicht geführt sind und in denen durch eine Gewichtung und Verknüpfung dieser Signale jeweils ein Ausgangssignal erzeugt wird,

   - bei welchem für jedes Ausgangsneuron q Stützwerte (xi, yi) für Eingangs- und Ausgangssignale vorgegeben werden,

   **dadurch gekennzeichnet**,

   - daß der Wertebereich des jeweiligen Eingangssignals x ermittelt und n Hilfsgrößen xi' derart festgelegt werden, daß sie auf dem jeweiligen Wertebereich gleichverteilt sind, wobei die Anzahl n der Hilfsgrößen gleich der Anzahl n der Neuronen in der jeweiligen Schicht ist,
   - daß die Parameter Gewicht ej und Offsetgröße dj der Eingangsfunktion des j-ten Neurons einer Schicht über die Verknüpfung der Eingangssignale in den Neuronen einer Schicht derart bestimmt werden, daß die Auswertung der Hilfsgrößen xi' eine quadratische Matrix einer vorgegebenen Struktur mit Matrixelementen mij ergibt, wobei

$$mij = fj(gj(dj, ej, xi'))$$

   ist und

   - der Zeilenindex i der Matrix die aktuelle Hilfsgröße

$$xi' \ (1 \leq i \leq n),$$

   - der Spaltenindex j der Matrix das j-te Neuron der jeweiligen Schicht $(1 \leq j \leq n)$,
   - gj die Eingangsfunktion des j-ten Neurons der jeweiligen Schicht in Abhängigkeit der Parameter dj, ej und xi' und
   - fj die Ausgangsfunktion des nichtlinearen Elements am Ausgang des j-ten Neurons der jeweiligen Schicht bezeichnet, wobei

     - fj(gj) eine geschachtelte Funktion zur Beschreibung eines Neurons mit Eingangsfunktion gj und Ausgangsfunktion fj bedeutet;

   - daß die Matrix dermaßen belegt ist, daß sie leicht invertierbar ist, und
   - daß die zur Bildung des Ausgangssignals y aus den Ausgangssignalen der Neuronen der vorhergehenden Schicht in einem Neuron notwendigen Gewichte ai durch Lösen eines linearen Gleichungssystems $\underline{M} \cdot \underline{a} = \underline{y}$ ermittelt werden, das aus q Gleichungen für die Ausgangssignalwerte yi der q Stützwerte (mit $q \leq n$) besteht, in denen die durch Auswerten der Eingangssignalwerte xi erhaltenen Werte mij der q Stützwerte jeweils mit den entsprechenden Gewichten ai multipliziert und addiert werden.

2. Verfahren nach Anspruch 1, **dadurch gekennzeichnet,**

- daß die Anzahl q der Stützwerte (xi, yi) gleich der Anzahl n der Neuronen in einer Zwischenschicht ist, so daß das Gleichungssystem eindeutig lösbar ist.

3. Verfahren nach Anspruch 1, **dadurch gekennzeichnet,**

- daß die Stützwerte (xi, yi) durch eine lineare Regression approximiert werden, falls ihre Anzahl q größer als die Anzahl n der Neuronen in einer Zwischenschicht ist.

4. Verfahren nach einem der Ansprüche 1 bis 3, **dadurch gekennzeichnet,**

- daß näherungsweise eine Matrixstruktur vorgegeben wird, bei der die Elemente mij der Matrix auf und oberhalb der Diagonalen den Wert Eins, unterhalb der Diagonalen den Wert Null haben, und
- daß die Ausgangsfunktion der nichtlinearen Elemente fj der Neuronen näherungsweise den Verlauf einer sigmoiden Funktion hat.

5. Verfahren nach einem der Ansprüche 1 bis 3, **dadurch gekennzeichnet,**

- daß näherungsweise eine Matrixstruktur vorgegeben wird, bei der die Elemente mij der Matrix auf und oberhalb der Diagonalen den Wert Eins, unterhalb der Diagonalen den Wert -1 haben, und
- daß die Ausgangsfunktion der nichtlinearen Elemente fj der Neuronen näherungsweise den Verlauf einer Tangens-Hyperbolikus-Funktion hat.

6. Verfahren nach einem der Ansprüche 1 bis 3, **dadurch gekennzeichnet,**

- daß näherungsweise eine Matrix entsprechend der Einheitsmatrix vorgegeben wird und
- daß die Ausgangsfunktion der nichtlinearen Elemente fj der Neuronen näherungsweise den Verlauf einer Glokkenkurve hat.

7. Verfahren nach Anspruch 6, **dadurch gekennzeichnet,**

- daß zur Verknüpfung in den Neuronen einer Schicht die Summe der Quadrate der mit einem Offset (x0, y0) überlagerten Eingangssignale (x, y) gebildet wird.

8. Verfahren nach einem der vorhergehenden Ansprüche, **dadurch gekennzeichnet,**

- daß im Fall einer Verknüpfung der Signale in den Neuronen der Ausgangsschicht durch Multiplikation oder Division zum Aufstellen des linearen Gleichungssystems statt der Signalwerte der Logarithmus der Signalwerte eingesetzt wird.

9. Neuronales Netz, erhältlich mit einem Verfahren nach einem der vorhergehenden Ansprüche.

**Claims**

1. A method of constructing a neural network which possesses at least one input and at least one output and neurons in a plurality of layers arranged in series, wherein in the neurons of an intermediate layer input signals are firstly weighted and then logic-linked to one another, and with a non-linear element an output signal is formed and each output of the output layer of the neural network is assigned an output neuron to which the output signals of the neurons of the preceding layer are fed and in which, by the weighting and logic-linking of these signals, an output signal is in each case produced

- in the case of which, for each output neuron, q support values (xi, yi) for input- and output signals are preset,

characterised in that

- the value range of the respective input signal x is determined and n auxiliary quantities xi' are defined in such manner that they are equally distributed over the respective value range, where the number n of the auxiliary quantities is equal to the number n of the neurons in the respective layer,

- the parameters, weight ej and offset quantity dj, of the input function of the j-th neuron of a layer are defined via the logic-linking of the input signals in the neurons of a layer in such manner that the analysis of the auxiliary quantities xi' results in a square matrix of a given structure comprising matrix elements mij, where

$$mij = fj (gj (dj, ej, xi'))$$

and

- the row index i of the matrix designates the current auxiliary quantity (xi' ($1 \leq i \leq n$),
- the column index j of the matrix designates the j-th neuron of the respective layer ($1 \leq j \leq n$),
- gj designates the input function of the j-th neuron of the respective layer in dependence upon the parameters dj, ej and xi' and
- fj designates the output function of the non-linear element at the output of the j-th neuron of the respective layer, where

    - fj (gj) signifies a nested function for the description of a neuron with an input function gj and an output function fj;

- the matrix is laid out in such a way that it can be easily inverted and
- the weights ai required to form the output signal y from the output signals of the neurons of the preceding layer in a neuron are determined by solving a linear equation system $\underline{M} . \underline{a} = \underline{y}$ which consists of q equations for the output signal values yi of the q support values (where $q \leq n$) in which the values mij of the q support values obtained by analysis of the input signal values xi are in each case multiplied by the corresponding weights ai and added.

2. A method as claimed in Claim 1, characterised in that

- the number q of the support values (xi, yi) is equal to the number n of the neurons in an intermediate layer so that the equation system can be solved unambiguously.

3. A method as claimed in Claim 1, characterised in that

- the support values (xi, yi) are approximated by linear regression if their number q is greater than the number n of the neurons in an intermediate layer.

4. A method as claimed in one of Claims 1 to 3, characterised in that

- in approximation, a matrix structure is preset wherein the elements mij of the matrix on and above the diagonal possess the value one and those below the diagonal possess the value zero and
- the output function of the non-linear elements fj of the neurons approximately possesses the characteristic of a sigmoid function.

5. A method as claimed in one of Claims 1 to 3, characterised in that

- in approximation, a matrix structure is preset wherein the elements mij of the matrix on and above the diagonal possess the value one and those below the diagonal possess the value -1 and
- the output function of the non-linear elements fj of the neurons approximately possesses the characteristic of a hyperbolic tangent function.

6. A method as claimed in one of Claims 1 to 3, characterised in that

- in approximation, a matrix corresponding to a unit matrix is preset and
- the output function of the non-linear elements fj of the neurons approximately possesses the characteristic of a bell curve.

7. A method as claimed in Claim 6, characterised in that

- for the logic linking operation in the neurons of a layer, the sum is formed of the squares of the input signals (x, y) superimposed with an offset (x0, y0).

8. A method as claimed in one of the preceding claims, characterised in that

- in the event of a logic linking of the signals in the neurons of the output layer by multiplication or division, instead of the signal values the logarithm of the signal values is used to set up the linear equation system.

9. A neural network obtainable with a method according to one of the preceding claims.


**Revendications**

1. Procédé de conception d'un réseau neuronal, qui comporte au moins une entrée et au moins une sortie ainsi que des neurones dans plusieurs couches disposées l'une derrière l'autre, dans lequel on pondère d'abord, dans les neurones d'une couche intermédiaire, des signaux d'entrée, puis on les combine entre eux, on forme par un élément non linéaire un signal de sortie et on associe à chaque sortie de la couche de sortie du réseau neuronal un neurone de sortie, auquel les signaux de sortie des neurones de la couche précédente sont envoyés et dans lequel on produit par pondération et combinaison de ces signaux un signal de sortie,

- dans lequel on prescrit pour chaque neurone de sortie q valeurs (xi, yi) d'appui pour des signaux d'entrée et de sortie,

caractérisé en ce que

- on détermine le domaine de valeurs de chaque signal x d'entrée et on fixe n grandeurs xi' auxiliaires, de telle sorte qu'elles soient réparties uniformément sur le domaine de valeurs considéré, le nombre n des grandeurs auxiliaires étant égal au nombre n des neurones de la couche considérée,
- on détermine les paramètres poids ej et grandeur de décalage dj de la fonction d'entrée du j-ème neurone d'une couche par combinaison des signaux d'entrée dans les neurones d'une couche, de telle sorte que l'exploitation des grandeurs xi' auxiliaires donne une matrice carrée d'une structure prescrite ayant les éléments de matrice mij,

$$mij = fj(gj(dj, ej, xi'))$$

et

- l'indice i de ligne de la matrice désigne la grandeur auxiliaire actuelle xi' ($1 \leq i \leq n$),
- l'indice j de colonne de la matrice désigne le j-ème neurone de la couche considérée ($1 \leq j \leq n$),
- gj désigne la fonction d'entrée du j-ème neurone de la couche considérée en fonction des paramètres dj, ej et xi' et
- fj désigne la fonction de sortie de l'élément non linéaire à la sortie du j-ème neurone de la couche considérée,

- fj (gj) est une fonction composée décrivant un neurone de fonction d'entrée gj et de fonction de sortie fj;

- la matrice est telle qu'elle peut être inversée facilement et
- on détermine les poids ai nécessaires dans un neurone à la formation du signal y de sortie à partir des signaux de sortie des neurones de la couche précédente en résolvant un système d'équations linéaires $\underline{M} \cdot \underline{a} = y$, qui consiste en q équations pour les valeurs yi de signaux de sortie des q valeurs d'appui (avec $q \leq n$), dans lesquelles on multiple les valeurs mij obtenues en exploitant les valeurs xi de signaux d'entrée des q valeurs d'appui respectivement par les poids ai correspondants et on fait l'addition.

2. Procédé suivant la revendication 1, caractérisé en ce que

- le nombre q des valeurs d'appui (xi, yi) est égal au nombre n de neurones dans une couche intermédiaire, de sorte que le système d'équation ait une seule solution.

3. Procédé suivant la revendication 1, caractérisé en ce que

- on fait l'approximation des valeurs (xi, yi) d'appui par une régression linéaire, dans le cas où leur nombre q est plus grand que le nombre n des neurones d'une couche intermédiaire.

4. Procédé suivant l'une des revendications 1 à 3, caractérisé en ce que

- on prescrit de manière approximative une structure de matrice, dans laquelle les éléments mij de la matrice ont, sur la diagonale et au-dessus de la diagonale, la valeur une et en-dessous de la diagonale la valeur zéro, et
- la fonction de sortie des éléments non linéaires fj des neurones a approximativement la courbe d'une fonction sigmoïde.

5. Procédé suivant l'une des revendications 1 à 3, caractérisé en ce que

- on prescrit de manière approximative une structure de matrice, dans laquelle les éléments mij de la matrice ont, sur la diagonale et au-dessus de la diagonale, la valeur une et au-dessous de la diagonale la valeur -1, et
- la fonction de sortie des éléments non linéaires fj des neurones a approximativement la courbe d'une fonction tangente hyperbolique.

6. Procédé suivant l'une des revendications 1 à 3, caractérisé en ce que

- on prescrit de manière approximative une matrice correspondant à la matrice unité et
- la fonction de sortie des éléments non linéaires fj des neurones a approximativement une courbe de Gauss.

7. Procédé suivant la revendication 6, caractérisé en ce que

- on forme, pour la combinaison dans les neurones d'une couche, la somme des carrés des signaux (x, y) d'entrée superposés à un décalage (x0, y0).

8. Procédé suivant l'une des revendications précédentes,
caractérisé en ce que

- on utilise, dans le cas d'une combinaison des signaux dans les neurones de la couche de sortie par multiplication ou division, pour poser le système d'équations linéaires, le logarithme des valeurs de signaux au lieu des valeurs de signaux.

9. Réseau neuronal pouvant être obtenu par un procédé suivant l'une des revendications précédentes.

FIG 1

FIG 2

FIG 3

FIG 4

FIG 5

FIG 6

FIG 7

FIG 8

FIG 9

FIG 10